# EUROPÄISCHE PATENTSCHRIFT

(11) **EP 2 900 527 B1**
(45) Veröffentlichungstag und Bekanntmachung des Hinweises auf die Patenterteilung: **11.11.2020**
(21) Anmeldenummer: 13774094.0
(22) Anmeldetag: 24.09.2013
(51) Int. Cl.: B60S 1/38, B26D 1/143, B23K 26/40, B26F 3/00

(54) **VERFAHREN ZUM TRENNEN VON WISCHLEISTEN, INSBESONDERE VON DOPPELEXTRUDIERTEN WISCHLEISTEN**
METHOD FOR SEPARATING WIPER STRIPS, IN PARTICULAR OF DUAL EXTRUDED WIPER STRIPS
PROCÉDÉ DE SÉPARATION DE RACLETTES D'ESSUYAGE, EN PARTICULIER DE RACLETTES D'ESSUYAGE EXTRUDÉES CONJOINTEMENT

(30) Priorität: 28.09.2012 DE 102012217862
(43) Veröffentlichungstag der Anmeldung: 05.08.2015
(73) Patentinhaber: Robert Bosch GmbH, 70442 Stuttgart (DE)
(72) Erfinder: JANS, Geert, B-3630 Maasmechelen (BE); VAN HOYE, Jan, B-3980 Tessenderlo (BE)
(86) Internationale Anmeldenummer: PCT/EP2013/069800
(87) Internationale Veröffentlichungsnummer: WO 2014/048903

(56) Entgegenhaltungen:
- EP-A1- 0 657 331
- EP-A1- 2 394 802
- EP-A2- 2 260 983
- DE-A1-102007 039 563
- DE-A1-102008 000 520
- DE-A1-102008 056 372
- DE-U1- 8 716 269
- US-A1- 2003 141 622

## Beschreibung

### Stand der Technik

Es ist bereits ein Verfahren zum Trennen von Wischleisten, insbesondere von doppelextrudierten Wischleisten, mit einer Wischleistentrenneinheit, wobei die Wischleisten zum Trennen in eine Transportrichtung bewegt werden, vorgeschlagen worden.

Aus der EP 0 657 331 A1 ist ein Verfahren bekannt, um Doppelwischleisten mit einem Messer voneinander zu trennen. Weiterhin ist Stand der Technik aus der gattungsgemäße DE 10 2007 039 563 A1 und aus der US 2003/141,622 A1 bekannt.

### Offenbarung der Erfindung

Die Erfindung geht aus von einem Verfahren zum Trennen von doppelextrudierten Wischleisten wie im Anspruch 1 beansprucht.

Es wird vorgeschlagen, dass die Wischleistentrenneinheit in zumindest einem Betrieb zumindest teilweise in eine Richtung bewegt wird, die zumindest im Wesentlichen senkrecht zur Transportrichtung steht, wodurch ein Trennen, insbesondere von beschichteten Wischleisten, vorteilhaft präzisiert und ein Verschleiß der Wischleistentrenneinheit reduziert werden kann. Prinzipiell sind auch andere, dem Fachmann als sinnvoll erscheinende Einsatzmöglichkeiten des Verfahrens denkbar. Unter einer "Wischleiste" soll insbesondere ein Wischblattbauteil aus einem elastischen Material mit einer Wischlippe verstanden werden, die dazu vorgesehen ist, zu einer Reinigung einer zu reinigenden Fläche, insbesondere einer Scheibenfläche, vorzugsweise einer Scheibenfläche eines Kraftfahrzeugs, in einem Kontakt über die zu reinigende Fläche bewegt zu werden. Bevorzugt ist die Wischleiste aus einem natürlichen oder künstlichen Elastomer, insbesondere aus Gummi, hergestellt. Unter "doppelextrudierten Wischleisten" sollen in diesem Zusammenhang insbesondere zumindest zwei Wischleisten verstanden werden, die in einem selben Extrusionsverfahren gleichzeitig extrudiert und somit einstückig ausgebildet werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss, in einem Stanzprozess, durch die Herstellung in einem Ein-oder Mehrkomponentenspritzverfahren und/oder in einem Extrusionsverfahren. Unter einer "Wischleistentrenneinheit" soll in diesem Zusammenhang insbesondere eine Einheit verstanden werden, die dazu vorgesehen ist, Wischleisten, insbesondere doppelextrudierte Wischleisten, in einem Trennverfahren zu trennen. Unter einer "Transportrichtung" soll in diesem Zusammenhang insbesondere eine Richtung verstanden werden, in welche sich die Wischleisten im Trennverfahren relativ zur Wischleistentrenneinheit bewegt. Bevorzugt verläuft die Transportrichtung zumindest im Wesentlichen parallel zu einer Hauptlängserstreckung der Wischleisten und/oder zumindest im Wesentlichen senkrecht zu einem Extrusionsquerschnitt der Wischleisten. Unter "zumindest im Wesentlichen" soll in diesem Zusammenhang insbesondere eine Abweichung von weniger als 20°, bevorzugt von weniger als 10°, besonders bevorzugt von weniger als 2° verstanden werden. Unter "vorgesehen" soll insbesondere speziell ausgelegt und/oder ausgestattet verstanden werden.

In einer weiteren Ausgestaltung der Erfindung wird vorgeschlagen, dass die Wischleistentrenneinheit zumindest teilweise in eine Richtung bewegt wird, die zumindest im Wesentlichen parallel zu einer Schneidekante der Wischleistentrenneinheit verläuft, wodurch eine besonders saubere Trennkante erreicht werden kann. Unter "zumindest teilweise" soll in diesem Zusammenhang insbesondere mit zumindest einem Bauteil verstanden werden. Unter einer "Schneidekante" soll in diesem Zusammenhang insbesondere eine Kante verstanden werden, die bei einem Trennvorgang an den Wischleisten anliegt und einen Linienkontakt mit den Wischleisten bildet.

Nach der Erfindung wird vorgeschlagen, dass die Wischleisten mit zumindest einem ersten Trennmesser geschnitten werden, wodurch eine besonders einfache, haltbare und kostengünstige Trennung der Wischleisten erfolgt. Unter einem "Trennmesser" soll in diesem Zusammenhang insbesondere ein messerartiges Bauteil verstanden werden, das zumindest eine Schneidkante aufweist, die dazu vorgesehen ist, zumindest ein weiteres Bauteil zu zerschneiden.

Ferner wird vorgeschlagen, dass die Wischleisten mit zumindest einem zweiten Trennmesser geschnitten werden, wodurch eine Haltbarkeit der Trennmesser weiter erhöht und ein Wartungsintervall vorteilhaft vergrößert werden kann.

In einer weiteren Ausgestaltung der Erfindung wird vorgeschlagen, dass zumindest das erste Trennmesser in eine Schwingung versetzt wird, wodurch eine Schneidekraft und somit ein Verschleiß des Trennmessers reduziert werden kann. Unter einer "Schwingung" soll in diesem Zusammenhang insbesondere eine harmonische Schwingung eines Bauteils verstanden werden. Vorteilhaft schwingt das Bauteil bei der Schwingung in einer Ebene, besonders vorteilhaft auf einer Bewegungslinie. Die Bewegungslinie verläuft vorteilhaft parallel zu einer Längserstreckung der Schneidekante des Trennmessers.

Fehlschnitte durch elastisches Deformieren der Wischleisten, insbesondere von beschichteten Wischleisten, können vorteilhaft vermieden werden, wenn zumindest in das erste Trennmesser ein Ultraschall eingeleitet wird. Vorteilhaft oszilliert das zumindest erste Trennmesser parallel zur Schneidekante. Weiterhin vorteilhaft wird zumindest in das zweite Trennmesser ebenfalls ein Ultraschall eingeleitet. Weiterhin vorteilhaft oszilliert das zumindest zweite Trennmesser parallel zur Schneidekante.

Werden die Wischleisten mit zumindest einem Schneiddraht geschnitten, können Produktionskosten vorteilhaft reduziert werden. Weiterhin vorteilhaft können mit einem Schneiddraht sowohl vulkanisierte, als auch nicht-vulkanisierte Wischleisten geschnitten werden. Unter einem "Schneiddraht" soll in diesem Zusammenhang insbesondere ein Draht, bevorzugt metallischer Draht, verstanden werden, der dazu vorgesehen ist, ein weiteres Bauteil zu schneiden. Zusätzlich wird vorgeschlagen, dass der Schneiddraht bei einem Schneidvorgang erhitzt wird. Weiterhin wird vorgeschlagen, dass der Schneiddraht beschichtet ist.

Des Weiteren wird vorgeschlagen, dass der Schneiddraht zumindest im Wesentlichen kontinuierlich in eine zumindest im Wesentlichen gleichbleibende Richtung bewegt wird, wodurch eine gleichmäßige Schneidqualität erreicht werden kann und Verschleißerscheinungen reduziert werden können. Unter "zumindest im Wesentlichen kontinuierlich" soll in diesem Zusammenhang insbesondere zumindest zeitweise mit einer gleichbleibenden Geschwindigkeit verstanden werden. Insbesondere ist auch denkbar, intervallmäßig die Geschwindigkeit zu verändern oder auf 0 zu reduzieren. Bevorzugt wird der Schneiddraht langfristig kontinuierlich in eine gleichbleibende Richtung bewegt. Unter "langfristig" soll in diesem Zusammenhang insbesondere über einen Zeitraum von zumindest einer Minute und vorteilhaft von zumindest einer Stunde verstanden werden.

Ferner wird vorgeschlagen, dass der Schneiddraht in eine Schwingung versetzt wird, wodurch eine Schneidekraft und somit ein Verschleiß des Schneiddrahts reduziert werden kann. Die Schwingung kann dabei zusätzlich zur kontinuierlichen Bewegung des Schneiddrahts eingebracht werden. Vorteilhaft schwingt der Schneiddraht bei der Schwingung in einer Ebene, besonders vorteilhaft auf einer Bewegungslinie. Die Bewegungslinie verläuft vorteilhaft parallel zu einer Längserstreckung des Schneiddrahts, beziehungsweise parallel zu einer Schneidekante des Schneiddrahts.

Fehlschnitte durch elastisches Deformieren der Wischleisten, insbesondere von beschichteten Wischleisten, können vorteilhaft vermieden werden, wenn in den Schneiddraht ein Ultraschall eingeleitet wird. Vorteilhaft oszilliert der Schneiddraht parallel zur Schneidekante. Weiterhin vorteilhaft oszilliert das zumindest zweite Trennmesser parallel zur Schneidekante.

In einer weiteren Ausgestaltung wird vorgeschlagen, dass die Wischleisten von einem Laserstrahl geschnitten werden, welcher in einem Flüssigkeitsstrahl verläuft, wodurch vorteilhaft ein verschleißfreies Trennen der Wischleisten erzielt werden kann. Vorteilhaft verläuft der Flüssigkeitsstrahl parallel zu einer Wischleistentrennlinie. Unter einem "Flüssigkeitsstrahl" soll in diesem Zusammenhang insbesondere ein Strahl verstanden werden, der von einer Flüssigkeit gebildet ist. Unter einem "Strahl" soll in diesem Zusammenhang insbesondere eine Form, insbesondere eine im Wesentlichen zylindrische Form einer bewegten Flüssigkeit verstanden werden, deren maximale Erstreckung eines Querschnitts erheblich geringer ist als eine Längserstreckung. Unter "erheblich geringer" soll in diesem Zusammenhang insbesondere weniger als 20 %, bevorzugt weniger als 10 %, besonders bevorzugt weniger als 5 % verstanden werden. Bevorzugt handelt es sich bei dem Flüssigkeitsstrahl um einen Strahl aus einem Lösungsmittel und besonders bevorzugt um einen Wasserstrahl. Insbesondere wird der Laserstrahl durch eine Totalreflexion innerhalb des Wasserstrahls geführt.

Unter einer "Wischleistentrennlinie" soll in diesem Zusammenhang insbesondere eine Trennlinie verstanden werden, an welcher die Wischleisten voneinander getrennt werden. Insbesondere verläuft die Wischleistentrennlinie senkrecht zur Transportrichtung.

Es wird ferner eine Wischleistentrenneinheit vorgeschlagen, die zumindest ein erstes Trennmesser aufweist, das dazu vorgesehen ist, in zumindest einem Betrieb parallel zu einer Schneidekante bewegt zu werden, wodurch ein besonders präzises und kostengünstiges Trennen von Wischleisten erreicht werden kann.

Darüber hinaus wird eine Wischleistentrenneinheit vorgeschlagen, die zumindest einen Schneiddraht aufweist, der dazu vorgesehen ist, in zumindest einem Betrieb parallel zu einer Schneidekante bewegt zu werden, wodurch ebenfalls ein besonders präzises und kostengünstiges Trennen von Wischleisten erreicht werden kann.

Ein besonders verschleißarmes Trennen von Wischleisten kann erreicht werden durch eine Wischleistentrenneinheit die einen Flüssigkeitsstrahl umfasst, in dem ein Laserstrahl verläuft, der dazu vorgesehen ist, in zumindest einem Betrieb die Wischleisten zu trennen.

Das erfindungsgemäße Verfahren soll hierbei nicht auf die oben beschriebene Anwendung und Ausführungsform beschränkt sein. Insbesondere kann das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischleistentrenneinheit und zwei Wischleisten in einer Schnittdarstellung,
- Fig. 2: ein weiteres Ausführungsbeispiel einer Wischleistentrenneinheit und zwei Wischleisten in einer Schnittdarstellung,
- Fig. 3: ein weiteres Ausführungsbeispiel einer Wischleistentrenneinheit und zwei Wischleisten in einer Schnittdarstellung,
- Fig. 4: ein weiteres Ausführungsbeispiel einer Wischleistentrenneinheit und zwei Wischleisten in einer Schnittdarstellung und
- Fig. 5: ein weiteres Ausführungsbeispiel einer Wischleistentrenneinheit und zwei Wischleisten in einer Schnittdarstellung.

### Beschreibung der Ausführungsbeispiele

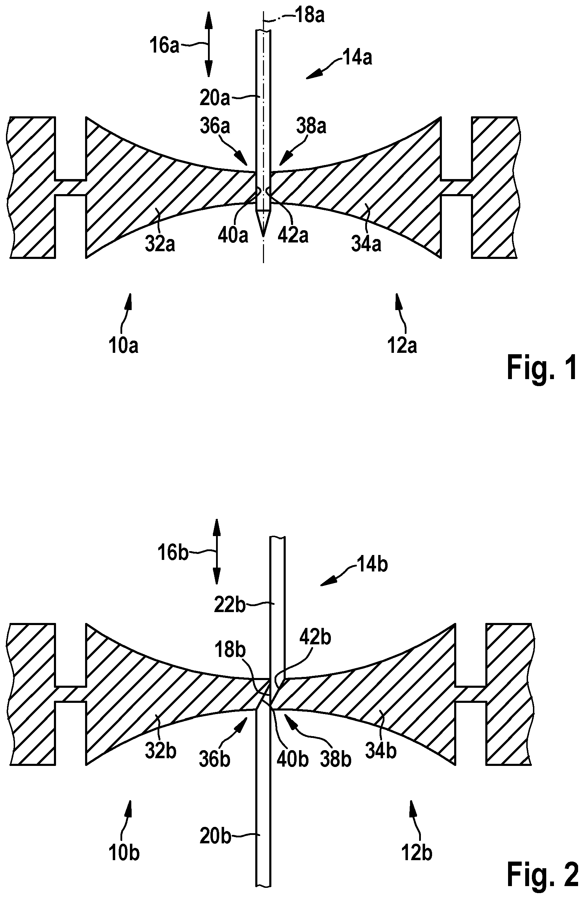

In der Figur 1 ist ein erstes Ausführungsbeispiel der Erfindung mit zwei doppelextrudierten Wischleisten 10a, 12a und einer Wischleistentrenneinheit 14a dargestellt. Die Wischleisten 10a, 12a weisen jeweils eine Wischlippe 32a, 34a auf, die mit freien Enden 36a, 38a einander zugewandt und vor einem Trennvorgang miteinander verbunden sind. Die Wischleisten 10a, 12a sind aus einem natürlichen Elastomer, insbesondere aus Gummi, hergestellt. Beide Wischleisten 10a, 12a werden in einem selben Extrusionsvorgang hergestellt und sind anschließend einstückig miteinander ausgebildet. Zusätzlich weisen die Wischleisten 10a, 12a eine nicht näher dargestellte Beschichtung auf.

Zum Trennen der Wischleisten 10a, 12a werden die Wischleisten 10a, 12a auf die Wischleistentrenneinheit 14a in eine Transportrichtung bewegt, die senkrecht zur Schnittebene der Figur 1 steht. Zusätzlich zur relativen Bewegung der Wischleisten 10a, 12a zur Wischleistentrenneinheit 14a in die Transportrichtung wird die Wischleistentrenneinheit 14a in eine Richtung 16a bewegt, die senkrecht zur Transportrichtung steht. Die Wischleistentrenneinheit 14a weist zum Trennen ein erstes Trennmesser 20a auf. Die Wischleisten 10a, 12a werden von dem ersten Trennmesser 20a geschnitten.

Das erste Trennmesser 20a schneidet die Wischleisten 10a, 12a mit einer Schneidekante 18a, die senkrecht zur Transportrichtung verläuft. Nach dem Trennen durch die Schneidekante 18a laufen die Wischleisten 10a, 12a in Transportrichtung am ersten Trennmesser 20a entlang. Dabei liegen die Wischleisten 10a, 12a jeweils mit einer Wischkante 40a, 42a an dem ersten Trennmesser 20a an. Das erste Trennmesser 20a ist von einem Stahl gebildet.

Das erste Trennmesser 20a wird in eine harmonische Schwingung versetzt. Das erste Trennmesser 20a schwingt dabei in die Richtung 16a, die parallel zur Schneidekante 18a verläuft. Eine Frequenz mit welcher das erste Trennmesser 20a schwingt, beträgt dabei 20 kHz. Es ist in diesem Zusammenhang jedoch auch denkbar, dass die Frequenz mehr als 20 kHz beträgt. Ebenso ist es vorstellbar, dass die Frequenz weniger als 20 kHz beträgt. Ein Fachmann wird die Frequenz dabei abhängig vom Anwendungsfall einstellen. Zur Erreichung der Schwingung wird in das erste Trennmesser 20a ein Ultraschall eingeleitet. Es ist dabei denkbar, dass der Ultraschall eine Resonanzfrequenz des ersten Trennmessers 20a trifft und ein Schwingen des ersten Trennmessers 20a dadurch verstärkt wird.

In den Figuren 2 bis 5 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 bis 5 ist der Buchstabe a durch die Buchstaben b bis e ersetzt.

In der Figur 2 ist ein zweites Ausführungsbeispiel der Erfindung mit zwei doppelextrudierten Wischleisten 10b, 12b und einer Wischleistentrenneinheit 14b dargestellt. Die Wischleisten 10b, 12b weisen jeweils eine Wischlippe 32b, 34b auf, die mit freien Enden 36b, 38b einander zugewandt und vor einem Trennvorgang miteinander verbunden sind. Beide Wischleisten 10b, 12b werden in einem selben Extrusionsvorgang hergestellt und sind anschließend einstückig miteinander ausgebildet.

Zum Trennen der Wischleisten 10b, 12b werden die Wischleisten 10b, 12b auf die Wischleistentrenneinheit 14b in eine Transportrichtung bewegt, die senkrecht zur Schnittebene der Figur 2 steht. Zusätzlich zur relativen Bewegung der Wischleisten 10b, 12b zur Wischleistentrenneinheit 14b in die Transportrichtung wird die Wischleistentrenneinheit 14b in eine Richtung 16b bewegt, die senkrecht zur Transportrichtung steht. Die Wischleistentrenneinheit 14b weist zum Trennen ein erstes Trennmesser 20b und ein zweites Trennmesser 22b auf. Die Wischleisten 10b, 12b werden von dem ersten Trennmesser 20b und von dem zweiten Trennmesser 22b geschnitten.

Das erste Trennmesser 20b und das zweite Trennmesser 22b liegen flächig aneinander an und bilden eine gemeinsame Schneidekante 18b. Die Schneidekante 18b verläuft senkrecht zur Transportrichtung und schneidet die Wischleisten 10b, 12b. Nach dem Trennen durch die Schneidekante 18b laufen die Wischleisten 10b, 12b in Transportrichtung teilweise am ersten Trennmesser 20b und am zweiten Trennmesser 22b entlang. Dabei liegen die Wischleisten 10b, 12b jeweils mit einer Wischkante 40b, 42b an dem ersten Trennmesser 20b und an dem zweiten Trennmesser 22b an. Das erste Trennmesser 20b und das zweite Trennmesser 22b ist jeweils von einem Stahl gebildet. Es ist in diesem Zusammenhang jedoch auch denkbar, dass das erste Trennmesser 20b und/oder das zweite Trennmesser 22b aus Keramik oder einem anderen, dem Fachmann als sinnvoll erscheinenden Material hergestellt ist.

Das erste Trennmesser 20b und das zweite Trennmesser werden jeweils in eine harmonische Schwingung versetzt. Es ist in diesem Zusammenhang auch denkbar, das nur eine Trennmesser der zumindest zwei Trennmesser 20b, 22b in eine harmonische Schwingung zu versetzen, wohingegen das andere Trennmesser in einer Ruheposition verbleibt. Das erste Trennmesser 20b und das zweite Trennmesser 22b schwingen dabei in die Richtung 16b, die parallel zur Schneidekante 18b verläuft. Eine Frequenz mit welcher das erste Trennmesser 20b und das zweite Trennmesser 22b schwingt, beträgt dabei 20 kHz. Es in diesem Zusammenhang jedoch auch denkbar, dass die Frequenz mehr als 20 kHz beträgt. Ebenso ist es vorstellbar, dass die Frequenz weniger als 20 kHz beträgt. Ein Fachmann wird die Frequenz dabei abhängig vom Anwendungsfall einstellen. Weiterhin ist es denkbar, dass sich eine Frequenz mit welcher das erste Trennmesser 20b schwingt von einer Frequenz mit welcher das zweite Trennmesser 22b schwingt, unterscheidet. Zur Erreichung der Schwingung wird in das erste Trennmesser 20b und in das zweite Trennmesser 22b ein Ultraschall eingeleitet. Es ist dabei denkbar, dass der Ultraschall eine Resonanzfrequenz des ersten Trennmessers 20b und/oder des zweiten Trennmessers 22b trifft und ein Schwingen des ersten Trennmessers 20b und/oder des zweiten Trennmessers 22b dadurch verstärkt wird.

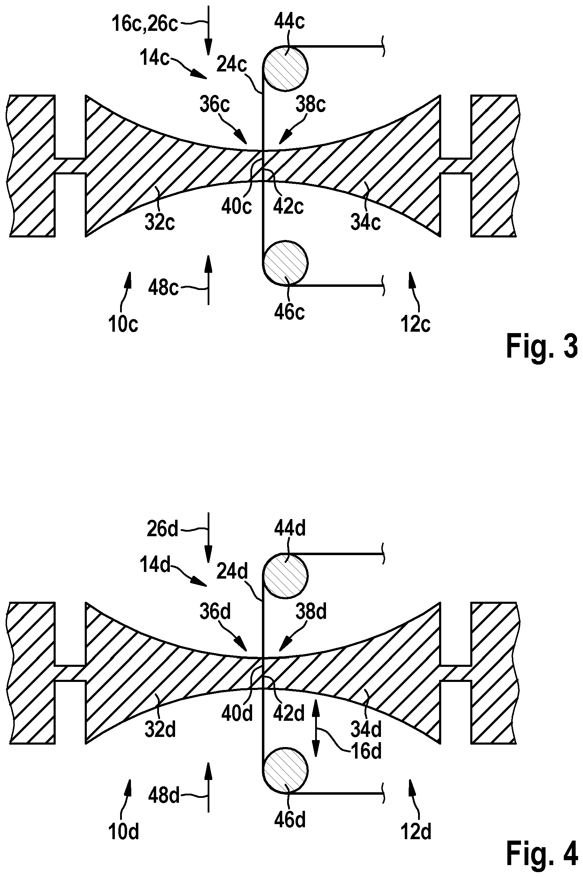

In der Figur 3 ist ein drittes Ausführungsbeispiel der Erfindung mit zwei doppelextrudierten Wischleisten 10c, 12c und einer Wischleistentrenneinheit 14c dargestellt. Die Wischleisten 10c, 12c weisen jeweils eine Wischlippe 32c, 34c auf, die mit freien Enden 36c, 38c einander zugewandt und vor einem Trennvorgang miteinander verbunden sind. Beide Wischleisten 10c, 12c werden in einem selben Extrusionsvorgang hergestellt und sind anschließend einstückig miteinander ausgebildet.

Zum Trennen der Wischleisten 10c, 12c werden die Wischleisten 10c, 12c auf die Wischleistentrenneinheit 14c in eine Transportrichtung bewegt, die senkrecht zur Schnittebene der Figur 3 steht. Zusätzlich zur relativen Bewegung der Wischleisten 10c, 12c zur Wischleistentrenneinheit 14c in die Transportrichtung, wird die Wischleistentrenneinheit 14c in eine Richtung 16c bewegt, die senkrecht zur Transportrichtung steht. Die Wischleistentrenneinheit 14c weist zum Trennen der Wischleisten 10c, 12c einen Schneiddraht 24c auf. Die Wischleisten 10c, 12c werden bei einem Schneidvorgang mit dem Schneiddraht 24c geschnitten. Der Schneiddraht 24c wird bei dem Schneidvorgang zusätzlich erhitzt. Es ist in diesem Zusammenhang selbstverständlich auch denkbar, dass der Schneiddraht 24c unerhitzt, insbesondere bei Raumtemperatur, die Wischleisten 10c, 12c schneidet. Ferner weist der Schneiddraht 24c eine verschleißmindernde Beschichtung auf.

Der Schneiddraht 24c bildet eine Schneidekante 18c. Die Schneidekante 18c verläuft senkrecht zur Transportrichtung und schneidet die Wischleisten 10c, 12c. Nach dem Trennen durch die Schneidekante 18c laufen die Wischleisten 10c, 12c in Transportrichtung am Schneiddraht 24c entlang. Dabei liegen die Wischleisten 10c, 12c jeweils mit einer Wischkante 40c, 42c an dem Schneiddraht 24c an. Der Schneiddraht 24c wird kontinuierlich in eine gleichbleibende Richtung 26c bewegt. Dabei rollt der Schneiddraht 24c von einer nicht gezeigten Abrolleinrichtung über eine erste Umlenkrolle 44c ab. Von der ersten Umlenkrolle 44c verläuft der Schneiddraht 24c zu einer zweiten Umlenkrolle 46c und schneidet dabei die Wischleisten 10c, 12c. Die erste Umlenkrolle 44c und die zweite Umlenkrolle 46c spannen dabei den Schneiddraht 24c und gewährleisten eine gleichmäßige Zugspannung. Von der zweiten Umlenkrolle 46c läuft der Schneiddraht 24 auf eine nicht dargestellte Aufrolleinrichtung. Es ist in diesem Zusammenhang jedoch auch denkbar, dass der Schneiddraht 24c endlos ist, das heißt einen geschlossenen Kreis bildet und von der zweiten Umlenkrolle 46c zurück zur ersten Umlenkrolle 44c verläuft. Weiterhin ist es denkbar, dass der Schneiddraht 24c von der zweiten Umlenkrolle 46c ausgehend in eine Richtung 48c zur ersten Umlenkrolle 44c bewegt wird.

In der Figur 4 ist ein viertes Ausführungsbeispiel der Erfindung mit zwei doppelextrudierten Wischleisten 10d, 12d und einer Wischleistentrenneinheit 14d dargestellt. Die Wischleisten 10d, 12d weisen jeweils eine Wischlippe 32d, 34d auf, die mit freien Enden 36d, 38d einander zugewandt und vor einem Trennvorgang miteinander verbunden sind. Beide Wischleisten 10d, 12d werden in einem selben Extrusionsvorgang hergestellt und sind anschließend einstückig miteinander ausgebildet.

Zum Trennen der Wischleisten 10d, 12d werden die Wischleisten 10d, 12d auf die Wischleistentrenneinheit 14d in eine Transportrichtung bewegt, die senkrecht zur Schnittebene der Figur 4 steht. Zusätzlich zur relativen Bewegung der Wischleisten 10d, 12d zur Wischleistentrenneinheit 14d in die Transportrichtung wird die Wischleistentrenneinheit 14d in eine Richtung 16d bewegt, die senkrecht zur Transportrichtung steht. Die Wischleistentrenneinheit 14d weist zum Trennen der Wischleisten 10d, 12d einen Schneiddraht 24d auf. Die Wischleisten 10d, 12d werden bei einem Schneidvorgang mit dem Schneiddraht 24d geschnitten. Der Schneiddraht 24d wird bei dem Schneidvorgang zusätzlich erhitzt. Ferner weist der Schneiddraht 24d eine verschleißmindernde Beschichtung auf.

Der Schneiddraht 24d bildet eine Schneidekante 18d. Die Schneidekante 18d verläuft senkrecht zur Transportrichtung und schneidet die Wischleisten 10d, 12d. Nach dem Trennen durch die Schneidekante 18d laufen die Wischleisten 10d, 12d in Transportrichtung am Schneiddraht 24d entlang. Dabei liegen die Wischleisten 10d, 12d jeweils mit einer Wischkante 40d, 42d an dem Schneiddraht 24d an. Der Schneiddraht 24d wird kontinuierlich in eine gleichbleibende Richtung 26d bewegt. Dabei rollt der Schneiddraht 24d von einer nicht gezeigten Abrolleinrichtung über eine erste Umlenkrolle 44d ab. Von der ersten Umlenkrolle 44d verläuft der Schneiddraht 24d zu einer zweiten Umlenkrolle 46d und schneidet dabei die Wischleisten 10d, 12d. Die erste Umlenkrolle 44d und die zweite Umlenkrolle 46d spannen dabei den Schneiddraht 24d und gewährleisten eine gleichmäßige Zugspannung. Von der zweiten Umlenkrolle 46d läuft der Schneiddraht 24 auf eine nicht dargestellte Aufrolleinrichtung. Es ist in diesem Zusammenhang jedoch auch denkbar, dass der Schneiddraht 24d endlos ist, das heißt einen geschlossenen Kreis bildet und von der zweiten Umlenkrolle 46d zurück zur ersten Umlenkrolle 44d verläuft. Weiterhin ist es denkbar, dass der Schneiddraht 24d von der zweiten Umlenkrolle 46d ausgehend in eine Richtung 48d zur ersten Umlenkrolle 44d bewegt wird. Zusätzlich zur kontinuierlichen Bewegung wird der Schneiddraht 24d in eine harmonische Schwingung versetzt. Der Schneiddraht 24d schwingt dabei in die Richtung 16d, die parallel zur Schneidekante 18d verläuft. Eine Frequenz mit welcher der Schneiddraht 24d schwingt, beträgt dabei 20 kHz. Es in diesem Zusammenhang jedoch auch denkbar, dass die Frequenz mehr als 20 kHz beträgt. Ebenso ist es vorstellbar, dass die Frequenz weniger als 20 kHz beträgt. Ein Fachmann wird die Frequenz dabei abhängig vom Anwendungsfall einstellen. Zur Erreichung der Schwingung wird in den Schneiddraht 24d ein Ultraschall eingeleitet. Es ist dabei denkbar, dass der Ultraschall eine Resonanzfrequenz des Schneiddrahts 24d trifft und ein Schwingen des Schneiddrahts 24d dadurch verstärkt wird.

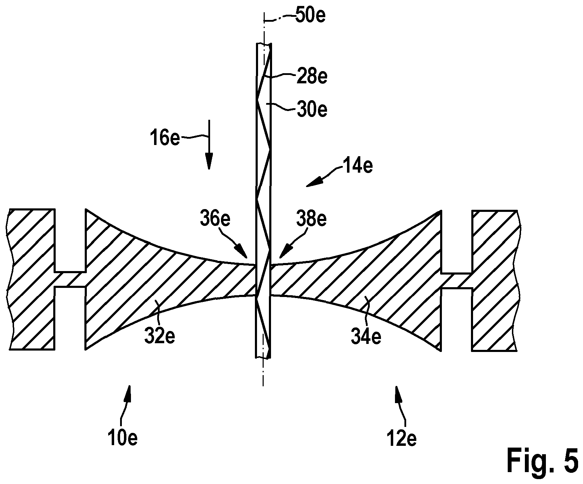

In der Figur 5 ist ein fünftes Ausführungsbeispiel mit zwei doppelextrudierten Wischleisten 10e, 12e und einer Wischleistentrenneinheit 14e dargestellt. Die Wischleisten 10e, 12e weisen jeweils eine Wischlippe 32e, 34e auf, die mit freien Enden 36e, 38e einander zugewandt und vor einem Trennvorgang miteinander verbunden sind. Beide Wischleisten 10e, 12e werden in einem selben Extrusionsvorgang hergestellt und sind anschließend einstückig miteinander ausgebildet.

Zum Trennen der Wischleisten 10e, 12e werden die Wischleisten 10e, 12e auf die Wischleistentrenneinheit 14e in eine Transportrichtung bewegt, die senkrecht zur Schnittebene der Figur 5 steht. Zusätzlich zur relativen Bewegung der Wischleisten 10e, 12e zur Wischleistentrenneinheit 14e in die Transportrichtung wird die Wischleistentrenneinheit 14e in eine Richtung 16e bewegt, die senkrecht zur Transportrichtung steht. Die Wischleistentrenneinheit 14e weist zum Trennen einen Laserstrahl 28e auf, welcher in einem Flüssigkeitsstrahl 30e der Wischleistentrenneinheit 14e verläuft, beziehungsweise in dem Flüssigkeitsstrahl 30e geführt wird. Die Wischleisten 10e, 12e werden von dem Laserstrahl 28e geschnitten. Der Flüssigkeitsstrahl 30e kühlt bei einem Trennvorgang eine entstehende Trennstelle der Wischleisten 10e, 12e und trägt entstehende Abfallprodukte ab. Der Flüssigkeitsstrahl 30e ist von einem Wasserstrahl gebildet. Der Laserstrahl 28 wird innerhalb des Flüssigkeitsstrahls 30e durch Totalreflexionen geführt. Der Flüssigkeitsstrahl 30e verläuft parallel zu einer Trennlinie 50e entlang derer die Wischleisten 10e, 12e geschnitten werden.

Das erfindungsgemäße Verfahren soll hierbei nicht auf die oben beschriebene Anwendung und Ausführungsform beschränkt sein. Insbesondere kann das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

## Patentansprüche

1. Verfahren zum Trennen von doppelextrudierten Wischleisten (10a -10e, 12a -12e), wobei die Wischleisten (10a - 10e, 12a - 12e) in einem selben Extrusionsverfahren gleichzeitig extrudiert und somit einstückig ausgebildet sind, mit einer Wischleistentrenneinheit (14a -14e), wobei die Wischleisten (10a -10e, 12a -12e) zum Trennen in eine Transportrichtung bewegt werden, **dadurch gekennzeichnet, dass** die Wischleistentrenneinheit (14a - 14e) zumindest teilweise in eine Richtung (16a - 16e) bewegt wird, die zumindest im Wesentlichen senkrecht zur Transportrichtung steht und dass die Wischleisten (10a; 10b, 12a; 12b) mit zumindest einem ersten Trennmesser (20a; 20b, 22b) und/oder mit zumindest einem Schneiddraht (24c; 24d) geschnitten werden.

2. Verfahren nach Anspruch 1, **dadurch gekennzeichnet, dass** die Wischleistentrenneinheit (14a - 14d) zumindest teilweise in eine Richtung (16a - 16d) bewegt wird, die zumindest im Wesentlichen parallel zu einer Schneidekante (18a - 18d) der Wischleistentrenneinheit (14a - 14d) verläuft.

3. Verfahren nach Anspruch 1 oder 2, **dadurch gekennzeichnet, dass** die Wischleisten (10b, 12b) mit zumindest einem zweiten Trennmesser (20b, 22b) geschnitten werden.

4. Verfahren nach einem der vorhergehenden Ansprüche, **dadurch gekennzeichnet, dass** zumindest das erste Trennmesser (20a; 20b, 22b) in eine Schwingung versetzt wird.

5. Verfahren zumindest nach einem der vorhergehenden Ansprüche, **dadurch gekennzeichnet, dass** zumindest in das erste Trennmesser (20a; 20b, 22b) ein Ultraschall eingeleitet wird.

6. Verfahren nach Anspruch 1, **dadurch gekennzeichnet, dass** der Schneiddraht (24c; 24d) zumindest im Wesentlichen kontinuierlich in eine zumindest im Wesentlichen gleichbleibende Richtung (26c; 26d) bewegt wird.

7. Verfahren nach Anspruch 1, **dadurch gekennzeichnet, dass** der Schneiddraht (24d) in eine Schwingung versetzt wird.

8. Verfahren nach Anspruch 6 oder 7, **dadurch gekennzeichnet, dass** in den Schneiddraht (24d) ein Ultraschall eingeleitet wird.

9. Wischleistentrenneinheit (14a - 14e) zum Trennen von doppelextrudierten Wischleisten (10a - 10e, 12a - 12e), die dazu ausgebildet ist, das Verfahren nach einem der vorhergehenden Ansprüche durchzuführen.

10. Wischleistentrenneinheit (14a; 14b) nach Anspruch 9, **gekennzeichnet durch** zumindest ein erstes Trennmesser (20a; 20b, 22b), das dazu vorgesehen ist, in zumindest einem Betrieb parallel zu einer Schneidekante (18a; 18b) bewegt zu werden.

11. Wischleistentrenneinheit (14c; 14d) zumindest nach Anspruch 9, **gekennzeichnet durch** zumindest einen Schneiddraht (24c; 24d), der dazu vorgesehen ist, in zumindest einem Betrieb parallel zu einer Schneidekante (18c; 18d) bewegt zu werden.

## Claims

1. Method for separating dual-extruded wiper strips (10a-10e, 12a-12e), wherein the wiper strips (10a-10e, 12a-12e) are extruded simultaneously in a same extrusion process and are therefore formed integrally, with a wiper strip separating unit (14a-14e), wherein the wiper strips (10a-10e, 12a-12e) for separating are moved in a transport direction, **characterized in that** the wiper strip separating unit (14a-14e) is at least partially moved in a direction (16a-16e) which is at least substantially perpendicular to the transport direction, and **in that** the wiper strips (10a; 10b, 12a; 12b) are cut with at least one first separating blade (20a; 20b, 22b) and/or with at least one cutting wire (24c; 24d) .

2. Method according to Claim 1, **characterized in that** the wiper strip separating unit (14a-14d) is at least partially moved in a direction (16a-16d) which runs at least substantially parallel to a cutting edge (18a-18d) of the wiper strip separating unit (14a-14d) .

3. Method according to Claim 1 or 2, **characterized in that** the wiper strips (10b, 12b) are cut with at least one second separating blade (20b, 22b).

4. Method according to one of the preceding claims, **characterized in that** at least the first separating blade (20a; 20b, 22b) is caused to vibrate.

5. Method at least according to one of the preceding claims, **characterized in that** ultrasound is introduced at least into the first separating blade (20a; 20b, 22b).

6. Method according to Claim 1, **characterized in that** the cutting wire (24c; 24d) is moved at least substantially continuously in an at least substantially constant direction (26c; 26d).

7. Method according to Claim 1, **characterized in that** the cutting wire (24d) is caused to vibrate.

8. Method according to Claim 6 or 7, **characterized in that** ultrasound is introduced into the cutting wire (24d) .

9. Wiper strip separating unit (14a-14e) for separating dual-extruded wiper strips (10a-10e, 12a-12e), which is designed to carry out the method according to one of the preceding claims.

10. Wiper strip separating unit (14a; 14b) according to Claim 9, **characterized by** at least one first separating blade (20a; 20b, 22b) which is provided to be moved parallel to a cutting edge (18a; 18b) in at least one operation.

11. Wiper strip separating unit (14c; 14d) at least according to Claim 9, **characterized by** at least one cutting wire (24c; 24d) which is provided to be moved parallel to a cutting edge (18c; 18d) in at least one operation.

## Revendications

1. Procédé pour séparer des raclettes d'essuyage extrudées conjointement (10a-10e, 12a-12e), les raclettes d'essuyage (10a-10e, 12a-12e) étant extrudées simultanément dans un même procédé d'extrusion et étant ainsi configurées d'un seul tenant, avec une unité de séparation de raclettes d'essuyage (14a-14e), les raclettes d'essuyage (10a-10e, 12a-12e) à séparer étant déplacées dans une direction de transport, **caractérisé en ce que** l'unité de séparation de raclettes d'essuyage (14a-14e) est déplacée au moins partiellement dans une direction (16a-16e) qui est au moins essentiellement perpendiculaire à la direction de transport et **en ce que** les raclettes d'essuyage (10a ; 10b, 12a ; 12b) sont coupées avec au moins un premier couteau de séparation (20a ; 20b, 22b) et/ou avec au moins un fil de coupe (24c ; 24d).

2. Procédé selon la revendication 1, **caractérisé en ce que** l'unité de séparation de raclettes d'essuyage (14a-14d) est déplacée au moins partiellement dans une direction (16a-16d) qui est au moins essentiellement parallèle à un bord de coupe (18a-18d) de l'unité de séparation de raclettes d'essuyage (14a-14d).

3. Procédé selon la revendication 1 ou 2, **caractérisé en ce que** les raclettes d'essuyage (10b, 12b) sont coupées avec au moins un deuxième couteau de séparation (20b, 22b).

4. Procédé selon l'une quelconque des revendications précédentes, **caractérisé en ce qu'au** moins le premier couteau de séparation (20a ; 20b, 22b) est mis en oscillation.

5. Procédé selon l'une quelconque des revendications précédentes, **caractérisé en ce qu'**un ultrason est introduit au moins dans le premier couteau de séparation (20a ; 20b, 22b).

6. Procédé selon la revendication 1, **caractérisé en ce que** le fil de coupe (24c ; 24d) est déplacé au moins essentiellement en continu dans une direction (26c ; 26d) au moins essentiellement constante.

7. Procédé selon la revendication 1, **caractérisé en ce que** le fil de coupe (24d) est mis en oscillation.

8. Procédé selon la revendication 6 ou 7, **caractérisé en ce qu'**un ultrason est introduit dans le fil de coupe (24d) .

9. Unité de séparation de raclettes d'essuyage (14a-14e) pour séparer des raclettes d'essuyage extrudées conjointement (10a-10e, 12a-12e), qui est configurée pour réaliser le procédé selon l'une quelconque des revendications précédentes.

10. Unité de séparation de raclettes d'essuyage (14a ; 14b) selon la revendication 9, **caractérisée par** au moins un premier couteau de séparation (20a ; 20b, 22b), qui est prévu pour être déplacé parallèlement à un bord de coupe (18a ; 18b) dans au moins une exploitation.

11. Unité de séparation de raclettes d'essuyage (14c ; 14d) selon la revendication 9, **caractérisée par** au moins un fil de coupe (24c ; 24d), qui est prévu pour être déplacé parallèlement à un bord de coupe (18c ; 18d) dans au moins une exploitation.
